# FASCICULE DE BREVET EUROPEEN

(11) **EP 3 545 240 B1**
(45) Date de publication et mention de la délivrance du brevet: **02.09.2020**
(21) Numéro de dépôt: 17811666.1
(22) Date de dépôt: 28.11.2017
(51) Int. Cl.: F24S 50/00, F24S 30/40, F24S 23/70, F24S 50/20

(54) **CENTRALE SOLAIRE À CONCENTRATION**
KONZENTRIERTE SOLARANLAGE
CONCENTRATED SOLAR PLANT

(30) Priorité: 28.11.2016 FR 1661560
(43) Date de publication de la demande: 02.10.2019
(73) Titulaire: Commissariat à l'Énergie Atomique et aux Énergies Alternatives, 75015 Paris (FR)
(72) Inventeur: DUPASSIEUX, Nathalie, 73370 Bourdeau (FR); CAMUS, Adrien, 83560 Vignon sur Verdon (FR); DELORD, Christine, 73190 Challes-les-Eaux (FR)
(74) Mandataire: Talbot, Alexandre
(86) Numéro de dépôt international: PCT/FR2017/053270
(87) Numéro de publication internationale: WO 2018/096301

(56) Documents cités:
- DE-A1-102008 008 403
- DE-B3-102007 050 031
- US-A1- 2010 139 644
- US-A1- 2012 279 485

## Description

### Domaine technique

L'invention se rapporte au domaine technique des centrales solaires à concentration, en particulier les centrales solaires thermodynamiques ou encore les centrales solaires photovoltaïques. L'invention trouve son application dès lors que la centrale solaire utilise des réflecteurs pour concentrer un flux solaire.

### Etat de la technique antérieure

Une centrale solaire à concentration connue de l'état de la technique, notamment des documents CN 104699116, CN 103034244, CN 104156003, comporte :
- un récepteur solaire ;
- un ensemble de réflecteurs, possédant chacun une position prédéterminée de sorte que l'ensemble de réflecteurs réfléchit un flux solaire incident vers le récepteur solaire ; chaque réflecteur comprenant un suiveur solaire ;
- des moyens de commande, configurés pour affecter une position de consigne à chaque suiveur solaire dans laquelle le réflecteur correspondant est destiné à présenter la position prédéterminée correspondante.

Dans le cas d'une centrale solaire thermodynamique, le récepteur solaire, appelé également récepteur central, permet la conversion du flux solaire réfléchi par l'ensemble des réflecteurs en chaleur sensible. Un fluide caloporteur circule classiquement au sein du récepteur solaire. Il existe différents types de récepteur solaire, par exemple des récepteurs à air pressurisé, à absorption directe, surfacique et volumétrique.

Dans le cas d'une centrale solaire photovoltaïque, le récepteur solaire est un ou des panneaux photovoltaïques.

L'expression « à concentration » provient du fait que l'ensemble des réflecteurs est agencé pour concentrer le flux solaire incident vers le récepteur solaire. Il existe différents types de réflecteurs, par exemple des héliostats, des miroirs de Fresnel, ou encore des miroirs cylindro-paraboliques.

Les suiveurs solaires (« *trackers* » en langue anglaise) permettent de suivre la trajectoire du soleil au cours de la journée.

Les positions prédéterminées de l'ensemble des réflecteurs sont des positions théoriques parfaitement connues dans la mesure où l'on connaît parfaitement la position du soleil pour un emplacement donné terrestre.

Une telle centrale solaire de l'état de la technique n'est pas entièrement satisfaisante dans la mesure où les actionneurs des suiveurs solaires ne possèdent généralement pas une précision mécanique suffisante (ou alors à des coûts prohibitifs) pour obtenir une parfaite adéquation entre la position de consigne et la position prédéterminée théorique. Il existe des systèmes de correction dans l'état de la technique mais ces systèmes nécessitent soit d'interrompre le fonctionnement de la centrale solaire, soit de déployer du matériel imposant et contraignant tels que des gyroscopes.

Le document US2010/0139644 divulgue une centrale solaire dans laquelle les héliostats sont commandés par un premier circuit de commande qui est en communication filaire ou sans fil avec deux autres circuits de commande. La communication entre le premier circuit de commande et les deux autres circuits de commande utilise des routeurs.

Les documents DE 10 2007 050031 et US 2012/279485 divulguent également une telle centrale solaire.

### Exposé de l'invention

L'invention vise à remédier en tout ou partie aux inconvénients précités. A cet effet, l'invention a pour objet une centrale solaire à concentration, comportant :
- un récepteur solaire ;
- un ensemble de réflecteurs, possédant chacun une position prédéterminée de sorte que l'ensemble de réflecteurs réfléchit un flux solaire incident vers le récepteur solaire ; chaque réflecteur comprenant un suiveur solaire, le flux solaire incident possédant un spectre ;
- des moyens de commande, configurés pour affecter une position de consigne à chaque suiveur solaire dans laquelle le réflecteur correspondant est destiné à présenter la position prédéterminée correspondante ;
la centrale solaire étant remarquable en ce qu'elle comporte :
- des moyens d'émission modifiant le spectre du flux solaire incident de manière à émettre un spectre modifié définissant le signal d'identification d'un réflecteur choisi parmi l'ensemble de réflecteurs, les moyens d'émission comportant un élément absorbant une partie du spectre du flux solaire incident de manière à émettre un spectre d'absorption définissant le signal d'identification ou comportant un élément réfléchissant une partie du spectre du flux solaire incident de manière à émettre un spectre de réflexion définissant le signal d'identification, ou des moyens d'émission configurés de sorte que le signal d'identification Sid soit une signature visuelle par exemple avec des modulations rythmiques de type morse ou des moyens d'émission configurés de sorte que le signal d'identification comporte des vibrations mécaniques ;
- des moyens de réception, agencés pour recevoir le signal d'identification, et configurés pour délivrer un signal de détection aux moyens de commande lorsque le réflecteur choisi présente la position prédéterminée correspondante ;
et en ce que les moyens de commande sont configurés pour ajuster la position de consigne affectée au suiveur solaire du réflecteur choisi, jusqu'à ce que le signal de détection soit délivré aux moyens de commande par les moyens de réception.

Ainsi, une telle centrale solaire à concentration selon l'invention permet d'assurer un ajustement permanent, continu, de la position de consigne relativement à la position prédéterminée théorique, sans nécessiter l'interruption du fonctionnement de la centrale solaire. Cet ajustement s'opère même en cas d'ombrage du réflecteur choisi. En outre, l'utilisation d'un signal d'identification avec des moyens d'émission/réception est une solution simple et peu coûteuse à mettre en œuvre relativement aux solutions de l'état de la technique. En d'autres termes, les moyens d'émission/réception assistent le suiveur solaire du réflecteur choisi pour conserver ou maximiser la précision de visée, par exemple en présence de vent ou d'une perte de précision mécanique.

La centrale solaire selon l'invention peut comporter une ou plusieurs des caractéristiques suivantes.

Selon une caractéristique de l'invention, les moyens d'émission sont montés sur le suiveur solaire du réflecteur choisi.

Ainsi, un avantage procuré est de ne pas obstruer les réflecteurs par les moyens d'émission afin de ne pas réduire leur surface active. La position relative du réflecteur relativement au suiveur solaire est parfaitement connue.

Selon une caractéristique non couverte par l'invention, le signal d'identification comporte des rayonnements électromagnétiques.

Ainsi, un avantage procuré par les rayonnements électromagnétiques est d'être peu sensible aux conditions météorologiques, et de pouvoir être adapté aux distances de la centrale par un choix avisé de longueur d'onde ou de gamme de longueurs d'ondes.

Selon une caractéristique de l'invention, le flux solaire incident possède un spectre, et les moyens d'émission modifient le spectre du flux solaire incident de manière à émettre un spectre modifié définissant le signal d'identification.

Ainsi, un avantage procuré par l'utilisation du flux solaire incident comme base de départ au signal d'identification est la simplicité de mise en œuvre, en l'absence de matériel imposant ou complexe à déployer sur une centrale solaire existante.

Selon une caractéristique de l'invention, les moyens d'émission comportent un élément absorbant une partie du spectre du flux solaire incident de manière à émettre un spectre d'absorption définissant le signal d'identification.

Ainsi, un avantage procuré par un spectre d'absorption est de définir simplement un signal d'identification, caractéristique et discriminant, pouvant en outre être aisément détecté.

Selon une caractéristique de l'invention, l'élément absorbant est sélectionné dans le groupe comportant une couche d'un polymère coloré, une couche de peinture, une couche d'une matrice chargée en particules.

Ainsi, un avantage procuré par ces éléments absorbants est la facilité de mise en œuvre sur une centrale solaire déjà existante.

Selon une caractéristique de l'invention, les moyens d'émission comportent un élément réfléchissant une partie du spectre du flux solaire incident de manière à émettre un spectre de réflexion définissant le signal d'identification.

Ainsi, un avantage procuré par un spectre de réflexion est de définir simplement un signal d'identification, caractéristique et discriminant, pouvant en outre être aisément détecté.

Selon une caractéristique de l'invention, l'élément réfléchissant comprend une surface d'un matériau métallique, de préférence sélectionné dans le groupe comportant Ag, Cu, Al, un acier.

Ainsi, un avantage procuré par ces éléments réfléchissants est la facilité de mise en œuvre sur une centrale solaire déjà existante.

Selon une caractéristique de l'invention, les moyens de réception comportent un spectroradiomètre ou un spectrophotomètre.

Ainsi, un avantage procuré est de pouvoir détecter aisément des rayonnements électromagnétiques par leur signature spectrale.

Selon une caractéristique de l'invention, le signal d'identification comporte des vibrations mécaniques.

Ainsi, un avantage procuré est de pouvoir discriminer un réflecteur par des ondes acoustiques. Selon l'environnement de la centrale solaire, il peut être intéressant de privilégier des ondes acoustiques à des ondes électromagnétiques, par exemple en raison de compatibilité électromagnétique à satisfaire.

### Brève description des dessins

D'autres caractéristiques et avantages apparaîtront dans l'exposé détaillé de différents modes de réalisation de l'invention, l'exposé étant assorti d'exemples et de référence aux dessins joints.
Figure 1 est une vue schématique d'une centrale solaire selon l'invention.
Figure 2a est un graphique illustrant le spectre solaire (ordonnées : unité arbitraire d'irradiance ; abscisses : longueur d'onde en microns).
Figure 2b est un graphique illustrant le spectre solaire modifié par les moyens d'émission d'un signal d'identification d'un réflecteur (ordonnées : unité arbitraire d'irradiance ; abscisses : longueur d'onde en microns).

### Exposé détaillé des modes de réalisation

Les éléments identiques ou assurant la même fonction porteront les mêmes références pour les différents modes de réalisation, par souci de simplification.

Un objet de l'invention est une centrale solaire 1 à concentration, comportant :
- un récepteur solaire 2 ;
- un ensemble de réflecteurs 3, possédant chacun une position prédéterminée de sorte que l'ensemble de réflecteurs 3 réfléchit un flux solaire FS incident vers le récepteur solaire 2 ; chaque réflecteur 3 comprenant un suiveur solaire 4 ;
- des moyens de commande, configurés pour affecter une position de consigne à chaque suiveur solaire 4 dans laquelle le réflecteur 3 correspondant est destiné à présenter la position prédéterminée correspondante ;
la centrale solaire 1 étant remarquable en ce qu'elle comporte :
- des moyens d'émission 5, agencés pour émettre un signal d'identification S_{id} d'un réflecteur choisi 3a parmi l'ensemble de réflecteurs 3 ;
- des moyens de réception 6, agencés pour recevoir le signal d'identification S_{id}, et configurés pour délivrer un signal de détection aux moyens de commande lorsque le réflecteur choisi 3a présente la position prédéterminée correspondante ;
et en ce que les moyens de commande sont configurés pour ajuster la position de consigne affectée au suiveur solaire 4 du réflecteur choisi 3a, jusqu'à ce que le signal de détection soit délivré aux moyens de commande par les moyens de réception 6.

### Centrale solaire

La centrale solaire 1 peut être une centrale solaire à concentration. La centrale solaire 1 à concentration peut être de type thermodynamique. La centrale solaire 1 peut être une centrale solaire photovoltaïque à concentration.

Dans le cas d'une centrale solaire 1 à concentration, le récepteur solaire 2, appelé également récepteur central, permet la conversion du flux solaire FS réfléchi par l'ensemble des réflecteurs 3 en chaleur, de préférence sensible. Un fluide caloporteur circule classiquement au sein du récepteur solaire 2. Lorsque la centrale solaire 1 à concentration est de type thermodynamique, le fluide caloporteur sert de source chaude dans un cycle thermodynamique. Il existe différents types de récepteur solaire 2, par exemple des récepteurs à air pressurisé, à absorption directe, surfacique ou volumétrique.

Dans le cas d'une centrale solaire 1 de type photovoltaïque à concentration, le récepteur solaire 1 est formé par un ou des panneaux photovoltaïques.

### Réflecteurs

L'expression « à concentration » provient du fait que l'ensemble des réflecteurs 3 est agencé pour concentrer le flux solaire FS incident vers le récepteur solaire 2. Les réflecteurs 3 sont avantageusement des héliostats, des miroirs de Fresnel, ou des miroirs cylindro-paraboliques. Lorsque les réflecteurs 3 sont des héliostats, le récepteur solaire 2 est avantageusement disposé en haut d'une tour.

Les suiveurs solaires 4 (« *trackers* » en langue anglaise) sont adaptés pour suivre la trajectoire du soleil au cours de la journée, et donc maximiser le flux solaire FS incident reçu par les réflecteurs 3. L'ensemble de réflecteurs 3 et les suiveurs solaires 4 correspondants sont avantageusement solidaires mécaniquement.

Les positions prédéterminées de l'ensemble des réflecteurs 3 sont des positions théoriques parfaitement connues dans la mesure où l'on connaît parfaitement la position du soleil pour un emplacement donné terrestre.

### Moyens d'émission

Les moyens d'émission 5 sont avantageusement montés sur le suiveur solaire 4 du réflecteur choisi 3a. Bien entendu, les moyens d'émission 5 peuvent équiper plusieurs réflecteurs 3a choisis, dès lors que les signaux d'identification S_{id} discriminent les réflecteurs 3a choisis. Toutefois, il est envisageable d'utiliser le même signal d'identification S_{id} pour plusieurs réflecteurs 3 dès lors que ceux-ci ont des positions suffisamment discriminantes. A titre d'exemples non limitatifs, les moyens d'émission 5 peuvent équiper des lignes de réflecteurs 3 (miroirs ou héliostats). Les moyens d'émission 5 peuvent également équiper l'ensemble des réflecteurs 3 de la centrale solaire 1.

Les moyens d'émission 5 sont avantageusement agencés de sorte que l'angle de réflexion du signal d'identification S_{id} soit différent de l'angle de réflexion du flux solaire FS se réfléchissant sur le réflecteur choisi 3a. Les moyens d'émission 5 sont avantageusement agencés de manière à ne pas être ombragés.

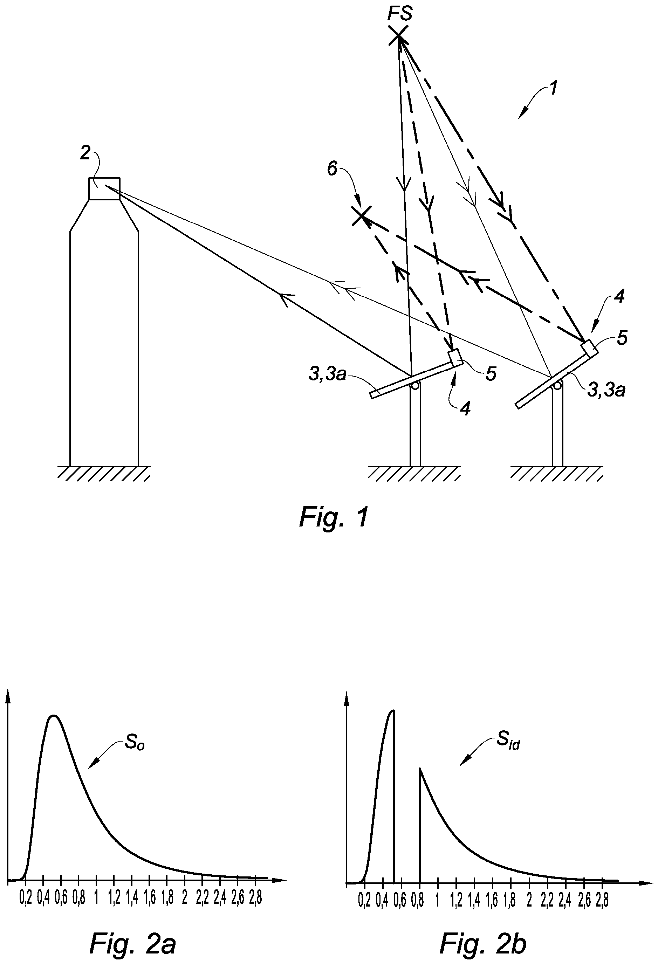

Le signal d'identification S_{id} comporte avantageusement des rayonnements électromagnétiques. Le flux solaire FS incident possède un spectre S₀, et les moyens d'émission 5 modifient avantageusement le spectre S₀ du flux solaire FS incident de manière à émettre un spectre modifié S_{id} définissant le signal d'identification. Comme illustré à la figure 2a, Le spectre S₀ du flux solaire FS s'étend principalement entre 250 nm et 2500 nm. Comme illustré à la figure 2b, le spectre modifié S_{id} doit donc s'inscrire entre 250 nm et 2500 nm. Le spectre modifié S_{id} peut être un spectre continu ou un spectre discontinu. A titre d'exemples non limitatifs, le spectre modifié S_{id} peut être :
- continu entre 1500 nm et 1750 nm,
- continu entre 275 nm et 500 nm, puis entre 1000 nm et 1100 nm.

Les moyens d'émission peuvent comporter un élément absorbant 5 qui absorbe une partie du spectre S₀ du flux solaire FS incident de manière à émettre un spectre d'absorption S_{id} définissant le signal d'identification. En d'autres termes, l'élément absorbant 5 peut fonctionner en transmission ou en réflexion du flux solaire FS incident après absorption de certaines longueurs d'onde. L'élément absorbant 5 est avantageusement sélectionné dans le groupe comportant une couche d'un polymère coloré, une couche de peinture, une couche d'une matrice chargée en particules. L'élément absorbant 5 peut être réalisé par un traitement de surface assurant une fonction de filtre de longueur(s) d'onde. Dans le cas d'une matrice chargée en particules, la matrice peut être réalisée dans un matériau quelconque tel SiO₂, le polyméthacrylate de méthyle (PMMA). Les particules de la charge, préférentiellement inorganiques, sont choisies pour absorber la partie du spectre S₀ du flux solaire FS.

Les moyens d'émission peuvent comporter un élément réfléchissant 5 qui réfléchit une partie du spectre S₀ du flux solaire FS incident de manière à émettre un spectre de réflexion S_{id} définissant le signal d'identification. L'élément réfléchissant 5 comprend avantageusement une surface d'un matériau métallique, de préférence sélectionné dans le groupe comportant Ag, Cu, Al, un acier. La surface d'un matériau métallique peut subir avantageusement un traitement tel qu'un polissage afin d'accroître ses propriétés réfléchissantes. Ces matériaux métalliques possèdent des spectres de réflexion suffisamment discriminants sur la gamme spectrale comprise entre 250 nm et 2500 nm. Par exemple, il est possible de discriminer le spectre de réflexion de Ag et Al entre 700 nm et 1000 nm. Il est également possible de revêtir les surfaces métalliques d'une couche antireflet afin de modifier le spectre de réflexion et d'obtenir un ensemble de signaux d'identification S_{id}. On privilégie une surface métallique afin de tendre vers une réflexion spéculaire (donc très peu diffuse) afin de faciliter la détection ultérieure du signal d'identification S_{id}.

Selon une alternative, le signal d'identification S_{id} peut comporter des vibrations mécaniques. Il peut donc s'agir d'un signal acoustique. Selon d'autres alternatives, le signal d'identification S_{id} peut être une signature visuelle par exemple des modulations rythmiques de type morse.

### Moyens de réception

Les moyens de réception comportent avantageusement un spectroradiomètre 6 ou un spectrophotomètre 6. Les moyens de réception mesurent avantageusement l'irradiance spectrale (e.g. en W/m²/nm) du signal d'identification S_{id} par longueur d'onde. En d'autres termes, les moyens de réception sont capables de détecter la signature spectrale correspondant au réflecteur choisi 3a.

Les moyens de réception 6 peuvent être agencés à proximité du récepteur solaire 2. Les moyens de réception 6 peuvent être agencés à distance du récepteur solaire 2, avec ou sans liaison mécanique avec le récepteur solaire 2, dès lors que leur position relative est parfaitement connue, et ce afin de les protéger des chaleurs élevées à proximité du récepteur solaire 2. Les moyens de réception 6 n'ont préférentiellement pas de liaison mécanique avec le récepteur solaire 2 lorsque le récepteur solaire 2 présente une position immuable dans le temps, par exemple au sein d'une tour solaire en béton. Les moyens de réception 6 ont préférentiellement une liaison mécanique avec le récepteur solaire 2 lorsque le récepteur solaire 2 présente une position susceptible d'évaluer dans le temps, par exemple lorsque celui-ci est haubané.

### Détection du signal d'identification

L'objectif est de maximiser la réponse spectrale des moyens de réception 6 sur la gamme spectrale du spectre modifié S_{id} par les moyens d'émission 5. A titre d'exemple, il est possible de modifier l'alignement des lignes de réflecteurs 3 (miroirs ou héliostats) en fonction de ladite gamme spectrale du spectre modifié S_{id} par les moyens d'émission 5, lorsque le seuil de détection n'est pas satisfaisant.

Les moyens de réception 6 délivrent le signal de détection avantageusement par reconnaissance spectrale. Plus précisément, à titre d'exemple, la reconnaissance spectrale du signal d'identification S_{id} est effectuée par comparaison entre le spectre normé mesuré et le spectre normé entré préalablement en référence pour différents signaux d'identification S_{id} (lorsque l'on souhaite identifier plusieurs réflecteurs 3). Cette reconnaissance spectrale est avantageusement effectuée sur ladite gamme spectrale du spectre modifié S_{id} par les moyens d'émission 5, selon un pas de longueurs d'onde suffisamment faible pour établir une discrimination certaine.

### Ajustement de la position de consigne

Les moyens de commande ajustent avantageusement la position de consigne en effectuant des boucles de rétroaction jusqu'à ce que le signal de détection soit délivré aux moyens de commande par les moyens de réception 6. Il peut s'agir d'une recherche itérative d'un maximum d'énergie par variations successives de l'alignement du réflecteur choisi 3a.

Les moyens de commande sont avantageusement configurés pour commander des actionneurs du suiveur solaire 4, les actionneurs pouvant être des moteurs, des vérins etc.

L'invention ne se limite pas aux modes de réalisation exposés. L'homme du métier est mis à même de considérer leurs combinaisons techniquement opérantes, et de leur substituer des équivalents.

## Revendications

1. Centrale solaire (1) à concentration, comportant :
- un récepteur solaire (2) ;
- un ensemble de réflecteurs (3), possédant chacun une position prédéterminée de sorte que l'ensemble de réflecteurs (3) réfléchit un flux solaire (FS) incident vers le récepteur solaire (2) ; chaque réflecteur (3) comprenant un suiveur solaire (4), le flux solaire (FS) incident possédant un spectre (S₀), ;
- des moyens de commande, configurés pour affecter une position de consigne à chaque suiveur solaire (4) dans laquelle le réflecteur (3) correspondant est destiné à présenter la position prédéterminée correspondante ;
la centrale solaire (1) étant **caractérisée en ce qu'**elle comporte :
- des moyens d'émission (5) modifiant le spectre (S₀) du flux solaire (FS) incident de manière à émettre un spectre modifié définissant le signal d'identification (S_{id}) d'un réflecteur choisi (3a) parmi l'ensemble de réflecteurs (3), les moyens d'émission (5) comportant un élément absorbant une partie du spectre (S₀) du flux solaire (FS) incident de manière à émettre un spectre d'absorption définissant le signal d'identification (S_{id}) ou comportant un élément réfléchissant une partie du spectre (S₀) du flux solaire (FS) incident de manière à émettre un spectre de réflexion définissant le signal d'identification (S_{id}), ou des moyens d'émission (5) configurés de sorte que le signal d'identification S_{id} soit une signature visuelle par exemple avec des modulations rythmiques de type morse ou des moyens d'émission (5) configurés de sorte que le signal d'identification (S_{id}) comporte des vibrations mécaniques ;
- des moyens de réception (6), agencés pour recevoir le signal d'identification (S_{id}), et configurés pour délivrer un signal de détection aux moyens de commande lorsque le réflecteur choisi (3a) présente la position prédéterminée correspondante ;
et **en ce que** les moyens de commande sont configurés pour ajuster la position de consigne affectée au suiveur solaire (4) du réflecteur choisi (3a), jusqu'à ce que le signal de détection soit délivré aux moyens de commande par les moyens de réception (6).

2. Centrale solaire (1) selon la revendication 1, dans laquelle les moyens d'émission (5) sont montés sur le suiveur solaire (4) du réflecteur choisi (3a).

3. Centrale solaire (1) selon l'une des revendications 1 et 2, dans laquelle les moyens d'émission (5) comportent un élément absorbant et dans laquelle l'élément absorbant est sélectionné dans le groupe comportant une couche d'un polymère coloré, une couche de peinture, une couche d'une matrice chargée en particules.

4. Centrale solaire (1) selon l'une des revendications 1 et 2, dans laquelle les moyens d'émission (5) comportent un élément réfléchissant et dans laquelle l'élément réfléchissant comprend une surface d'un matériau métallique, de préférence sélectionné dans le groupe comportant Ag, Cu, Al, un acier.

5. Centrale solaire (1) selon l'une des revendications précédentes, dans laquelle les moyens d'émission (5) modifient le spectre (S₀) du flux solaire (FS) incident de manière à émettre un spectre modifié définissant le signal d'identification (S_{id}) et dans laquelle les moyens de réception (6) comportent un spectroradiomètre ou un spectrophotomètre.

## Patentansprüche

1. Konzentrierte Solaranlage (1), umfassend:
- einen Solarempfänger (2);
- eine Anordnung von Reflektoren (3), die jeweils eine vorherbestimmte Position derart aufweisen, dass die Anordnung von Reflektoren (3) einen einfallenden Solarfluss (FS) auf den Solarempfänger (2) reflektieren; wobei jeder Reflektor (3) einen Solarfolger (4) umfasst, und der einfallende Solarfluss (FS) ein Spektrum (So) aufweist;
- Steuermittel, die dafür ausgelegt sind, um jeden Solarfolger (4) in eine Zielposition zu versetzen, die der vorherbestimmten Position des jeweiligen Reflektors (3) zugeordnet ist;
wobei die Solaranlage (1) **dadurch gekennzeichnet ist, dass** sie umfasst:
- Emissionsmittel (5), die das Spektrum (So) des einfallenden Solarflusses (FS) modifizieren, um ein modifiziertes Spektrum zu emittieren, welches das Identifikationssignal (S_{id}) eines aus der Anordnung der Reflektoren (3) ausgewählten Reflektors (3a) definiert, wobei die Emissionsmittel (5) ein Element umfassen, das einen Teil des Spektrums (So) des einfallenden Solarflusses (FS) absorbiert, um ein Absorptionsspektrum zu emittieren, welches das Identifikationssignal (S_{id}) definiert, oder ein Element umfassen, das einen Teil des Spektrums (So) des einfallenden Solarflusses (FS) reflektiert, um ein Reflexionsspektrum zu emittieren, welches das Identifikationssignal (S_{id}) definiert, oder die Emissionsmittel (5) derart ausgelegt sind, dass das Identifikationssignal S_{id} eine visuelle Signatur zum Beispiel mit rhythmischen Modulationen vom Morse-Typ ist, oder die Emissionsmittel (5) derart ausgelegt sind, dass das Identifikationssignal (S_{id}) mechanische Vibrationen umfasst;
- Empfangsmittel (6), die eingerichtet sind, um das Identifikationssignal (S_{id}) zu empfangen, und dafür ausgelegt ist, um ein Detektionssignal an die Steuermittel zu liefern, wenn der ausgewählte Reflektor (3a) die entsprechende vorherbestimmte Position einnimmt;
und dadurch, dass die Steuermittel dafür ausgelegt sind, um die Zielposition, in die der Solarfolger (4) des ausgewählten Reflektors (3a) versetzt wird, einzustellen, bis das Detektionssignal von den Empfangsmitteln (6) an die Steuermittel geliefert wird.

2. Solaranlage (1) nach Anspruch 1, wobei die Emissionsmittel (5) an dem Solarfolger (4) des ausgewählten Reflektors (3a) montiert sind.

3. Solaranlage (1) nach einem der Ansprüche 1 und 2, wobei die Emissionsmittel (5) ein absorbierendes Element umfassen, und wobei das absorbierende Element ausgewählt ist aus der Gruppe umfassend eine gefärbte Polymerschicht, eine Farbschicht, eine mit Teilchen geladene Matrix.

4. Solaranlage (1) nach einem der Ansprüche 1 und 2, wobei die Emissionsmittel (5) ein reflektierendes Element umfassen, und wobei das reflektierende Element eine Fläche aus einem metallischen Material umfasst, das vorzugsweise ausgewählt ist aus der Gruppe umfassend Ag, Cu, Al, einen Stahl.

5. Solaranlage (1) nach einem der vorhergehenden Ansprüche, wobei die Emissionsmittel (5) das Spektrum (So) eines einfallenden Solarflusses (FS) modifizieren, um ein modifiziertes Spektrum zu emittieren, welches das Identifikationssignal (S_{id}) definiert, und wobei die Empfangsmittel (6) ein Spektroradiometer oder ein Spektrophotometer umfassen.

## Claims

1. Concentrated solar power plant (1) comprising:
- a solar receiver (2);
- a set of reflectors (3) each having a predefined position so that the set of reflectors (3) reflects an incident solar flux (FS) to the solar receiver (2); each reflector (3) comprising a solar tracker (4), the incident solar flux (FS) comprising a spectrum (So) ;
- control means configured to assign a setpoint position to each solar tracker (4) in which the corresponding reflector (3) is designed to present the corresponding predefined position;
the solar power plant (1) being **characterised in that** it comprises:
- transmitting means (5) modifying the spectrum (So) of the incident solar flux (FS) so as to emit a modified spectrum defining the identification signal (S_{id}) of a reflector (3a) chosen from the set of reflectors (3), the transmitting means (5) comprising an element absorbing a part of the spectrum (So) of the incident solar flux (FS) so as to emit an absorption spectrum defining the identification signal (S_{id}) or comprising an element reflecting a part of the spectrum (So) of the incident solar flux (FS) so as to emit a reflection spectrum defining the identification signal (S_{id}), or transmitting means (5) configured so that the identification signal (S_{id}) is a visual signature for example with rhythmic modulations of Morse code type or transmitting means (5) configured so that the identification signal (S_{id}) comprises mechanical vibrations ;
- receiving means (6) arranged to receive the identification signal (S_{id}) and configured to deliver a detection signal to the control means when the chosen reflector (3a) presents the corresponding predefined position;
and **in that** the control means are configured to adjust the setpoint position assigned to the solar tracker (4) of the chosen reflector (3a) until the detection signal is delivered to the control means by the receiving means (6).

2. Solar power plant (1) according to claim 1, wherein the transmitting means (5) are located on the solar tracker (4) of the chosen reflector (3a).

3. Solar power plant (1) according to one of claims 1 and 2, wherein the transmitting means (5) comprise an absorbing element and wherein the absorbing element is selected from the group comprising a layer of coloured polymer, a layer of paint, and a particle-charged matrix layer.

4. Solar power plant (1) according to one of claims 1 and 2, wherein the transmitting means (5) comprise a reflecting element and wherein the reflecting element comprises a surface made from a metallic material, preferably selected from the group comprising Ag, Cu, Al, and a steel.

5. Solar power plant (1) according to one of the foregoing claims, wherein the transmitting means (5) modify the spectrum (So) of the incident solar flux (FS) so as to emit a modified spectrum defining the identification signal (S_{id}) and wherein the receiving means (6) comprise a spectroradiometer or a spectrophotometer.
